Europäisches Patentamt

European Patent Office

Office européen des brevets

(11) Publication number: **0 302 141 B1**

# EUROPEAN PATENT SPECIFICATION

(45) Date of publication of patent specification: **05.02.92**   (51) Int. Cl.⁵: **D01F 1/10, C08K 3/14**

(21) Application number: **87116381.2**

(22) Date of filing: **06.11.87**

(54) **Solar heat selective absorptive fiber material.**

(30) Priority: **07.08.87 JP 198488/87**

(43) Date of publication of application:
**08.02.89 Bulletin 89/06**

(45) Publication of the grant of the patent:
**05.02.92 Bulletin 92/06**

(84) Designated Contracting States:
**AT BE CH DE ES FR GB GR IT LI LU NL SE**

(56) References cited:
**EP-A- 0 272 408**
**JP-A-56 112 508**

(73) Proprietor: **DESCENTE LTD.**
**11-3, Dohgashiba 1-chome**
**Tennohji-ku Osaka(JP)**

(72) Inventor: **Kagechi, Shunsaku**
**11-3, Dohgashiba 1-chome**
**Tennohji-ku Osaka(JP)**
Inventor: **Fujimoto, Masanori**
**11-3, Dohgashiba 1-chome**
**Tennohji-ku Osaka(JP)**

(74) Representative: **Dreiss, Hosenthien & Fuhlen-**
**dorf**
**Gerokstrasse 6**
**W-7000 Stuttgart 1(DE)**

**Description**

BACKGROUND OF THE INVENTION

This invention relates to fiber materials having properties such as selective absorption of solar energy effectively with a minimum loss of heat radiation which is useful for clothings such as sports and leisures or interior goods like curtain and the like or the outdoor leisure goods such as a tent and the like.

A variety of processings are applied to clothings for sports or leisure like ski, scating, mountain climbing, fishing and the like or outdoor goods for a tent and the like, interior goods like curtain and the like with a view of giving thermal insulation or keeping warm, but as one of the processings, a processing for absorbing the solar heat efficiently and preventing reflection of the light rays is carried out.

As the effective means for this processing, heretofore, a method of forming a multilayer film of metal, dielectric material, semiconductor material and the like on the surface of the fiber cloth is adapted (EP-A-0 272 408).

The formation of the film by the conventional technique mentioned in the foregoing is carried out by mixing fine powder of the material that becomes solar heat absorbing material with a compound such as, for example, polyurethane, polyacrylic ester and other proper resin base binder, uniformly dispersing said fine powder in said compound, and coating or printing the dispersed mixture on the surface of the basic fiber material.

However, since the formation of the multilayerfilm must be taken a complicated process, because the coating or the printing must be repeated and moreover, in view of relationship of bonding density degree of the formed film to the surface of the basic fiber material, there is a problem of forming interface peel-apart from the portion accompanied by expansion and contraction.

SUMMARY OF THE INVENTION

An object of this invention is to eliminate the problems of the conventional technique by applying the solar heat selective absorptive properties of high performance to the fiber itself which becomes raw material of clothings.

The solar heat selective absorptive fiber to be provided by this invention is the fiber material which is obtained by melt spinning of kneaded composition comprising a carbide powder selected from Zr, Ti and Hf and thermoplastic synthetic linear polymer, or the mixed powder of said carbide and aluminium and thermoplastic synthetic linear polymer, or by melt spinning of said kneaded composition and the thermoplastic synthetic linear polymer.

A peak of the solar radiation spectrum exists in the periphery of a wavelength of 0.5 $\mu$m, and it contains more than 95% of the whole energy between the wavelength of 0.3 to 2.0 $\mu$m. For this reason, as the material capable of selectively absorbing the solar heat, the material is required to have high absorption in the region of of the wavelengths of 0.3 to 2.0 $\mu$m and also have small thermal emissivity in the infrared ray region of more than 2.0 $\mu$m.

The carbide of the transition metal belonging to the IV group of the periodic table which is applied in this invention, TiC, ZrC or HfC satisfy the requirement of the material mentioned above. ZrC has the most efficient and selective absorptivity so that the ZrC is effectively used.

The carbide such as TiC, ZrC, HfC is employed as sole powder. Mixed powder adding aluminum to said carbide can be also employed. The condition of the powder is preferably as fine as possible, and the use of the fine powder whose particle diameter is less than 15 $\mu$m is desirable. Also, a blending ratio of the carbide and the aluminum is set in the range of 1 : 0.3 ~ 1.0.

As the thermoplastic synthetic linear polymers, the polymers are selected from acryl or polyamide such as nylon 6, nylon 66, nylon 610, nylon 11, nylon 12 and the like, polyester such as polyethylene terephthalate, polybutylene terephthalate and polyolefin such as polyethylene, polypropylene and the like, but particularly, the polyamide like the nylon 6, nylon 66 or the polyester like the polyethylene terephthalate may be effectively used.

The kneaded composition of the TiC, ZrC, HfC powder and the thermoplastic synthetic linear polymer or the kneaded composition of the mixed powder of the carbide and aluminum and the thermoplastic synthetic linear polymer can be prepared by normal methods of adding and mixing the powder to the polymer in the melting condition. In this case, a ratio of addition of the carbide powder or the mixed powder of the carbide and aluminum against the polymer component is desirably set at 1 to 10% by weight. When this ratio of addition is lower than 1.0% by weight, the solar heat absorbing performance cannot be rendered sufficiently and also in case it exceeds the blending condition of 10% by weight, the fluidity of the polymer is deteriorated, and the spinning property becomes poor and at the same time the strength is deteriorated.

The kneaded composition itself is melted and spun by the conventional method or the kneaded composition and the thermoplastic synthetic linear polymer such as the polyamide, polyester and the like are melted and are subjected to the compound spinning. For the melt spinning method, an ordinary screw type or pressure melt type extrusion spinning device can be used, but in case of the compound spinning, the construction is formed in such a way that the kneaded composition containing the solar heat absorptive component is formed as the core, and the thermoplastic synthetic linear polymer is formed as the sheath.

The filament spun by the foregoing manner is processed to the goods or particular purpose upon knit weaving of the filament alone or the mixture with other fibers. In case of mixing with the other fibers, any means may be employed such as mixing fiber, joined yarn, joined twisting, union cloth or union knit.

The carbide component such as TiC, ZrC, HfC or the mixed component of the carbide and Al has properties of absorbing the light energy of more than about 0.6 V, and reflecting the light of lower energy than said light of higher energy, and the properties effectively function for the selective absorption of the solar energy of the wavelength 0.3 to 2.0 $\mu$m. Accordingly, the fiber containing the foregoing excellent solar heat absorptive component in the textile weave becomes the cloth by weaving or knitting which has functions of effective absorption of the solar energy as the whole and of preventing the radiation loss.

BRIEF DESCRIPTION OF THE DRAWINGS

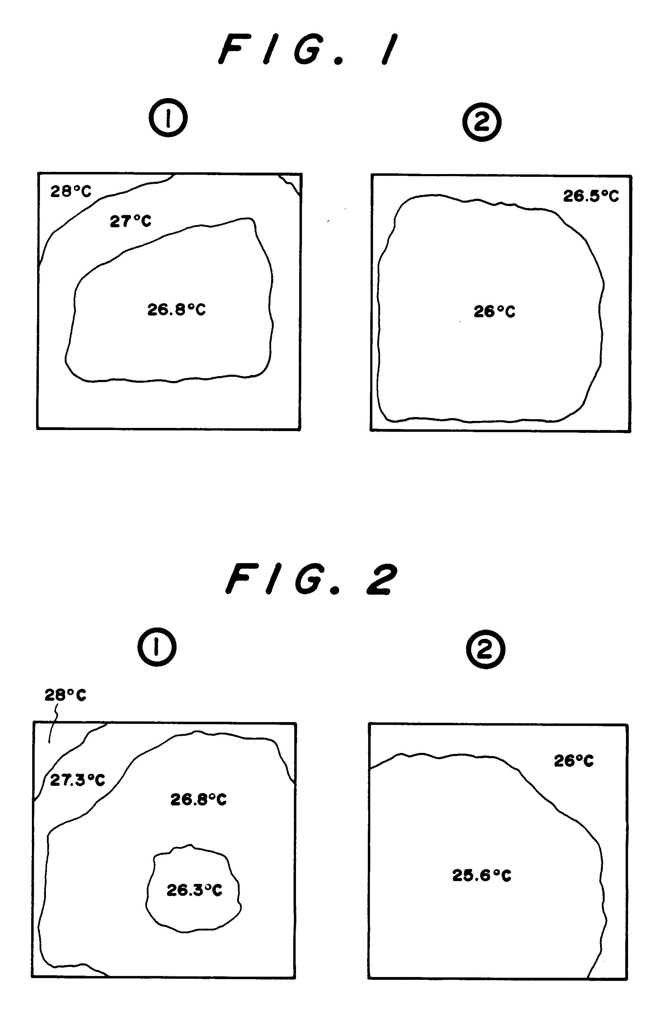

FIG. 1 and FIG. 2 show thermo patterns of the cloth samples by the Embodiments (1) and (2).

DETAILED DESCRIPTION OF THE PREFERRED EMBODIMENTS

(1) 2 weight % of the ZrC powder whose particle diameter was less than 10 $\mu$m was blended with the melted nylon 6, and the mixed powders were sufficiently kneaded to uniformly disperse whereby the kneaded composition was prepared. This kneaded composition was discharged as the filament of about 79 d tex (70 den) by a screw type melt spinning machine. There was no problem such as yarn cut and the like in the stage of the spinning, and the yarn producing properties were excellent.

The foregoing solar heat selective absorptive fiber was used as the yarn to produce the plain fabric taffeta. The keeping warm or thermal insulation properties were measured of the cloth sample prepared by the foregoing method and the nylon cloth (blank material) without the solar heat absorptive performance as objects. The results are shown in Table I. By the way, among the items of properties, consumed calories and thermal conductivity were obtained by using a thermolabo testing machine, and the moisture permeating property was obtained by using cup method of JIS L-1099.

Table I

| sample/properties | consumed calory (W/m$^3$C) | thermal conductivity (W/m$^\circ$C) | moisture permeability (g/m$^3$.h) |
|---|---|---|---|
| cloth sample | 379 | 0.0550 | 331 |
| blank material | 375 | 0.0518 | 429 |

Also, with respect to the cloth sample and the blank material, the light was irradiated thereon by the illuminating lamp for photography of 500 W at a distance of 1.5 m, and the heat distribution condition of the surface of the cloth was photographed by a thermo-viewer camera for about 3 minutes. FIG. 1 shows the thermo pattern, and ① in FIG. 1 shows the cloth sample, and ② in FIG. 1 shows the blank material.

From the result of the keeping warm properties and the thermo pattern, it is recognized that the cloth sample woven with the solar heat selective absorptive fiber of this invention has the high thermal conductivity and the excellent heat absorption performance when compared with the blank material.

(2) The mixed powder was prepared by blending 3 parts of the aluminum powder whose particle diameter was less than 1 $\mu$m with 5 parts of the ZrC powder whose particle diameter was less than 3 $\mu$m, and 5% by weight of this mixed powder was mixed with the nylon 6, and the mixture was melted and kneaded by a biaxial extruding machine, and then, it was extruded into water to prepare pellets. The compound filament was manufactured by using the pelletlike kneaded composition and the nylon 66 by employing a normal compound spinning method so that the kneaded composition was the core and the nylon 66 was the sheath.

The resulting solar heat selective absorptive compound filament was used as the yarn, and the plain fabric taffeta was woven similar to the Embodiment (i).

With respect to the blank material woven employing the cloth sample and the nylon 6 only, the pattern of the heat distribution was measured by the thermo viewer camera similar to the Embodiment (1), and it is shown in FIG. 2. ① in FIG. 2 shows the cloth sample by the fiber of this invention and ② shows each thermo pattern of the blank material.

According to this invention, the material which selectively and efficiently absorbs the solar heat and which has small heat radiation is uniformly dispersed in the textile weave, so that the clothing made of the foregoing fiber according to this invention does not generate a phenomenon like interface peel-apart as seen in the conventional technique, and can maintain the constantly stable solar heat selective absorptive performance. Accordingly, the clothing exhibits the excellent performances when applied to the clothings for sports and leisure requiring the keeping warm properties, interior goods such as curtain and the like, or the outdoor leisure goods such as a tent and the like.

**Claims**

1. A solar heat selective absorptive fiber obtained by melt-spinning of a kneaded composition comprising a carbide powder selected from Zr, Ti and Hf, and a thermoplastic synthetic linear polymer.

2. A solar heat selective absorptive fiber as set forth in claim 1, in which an aluminum powder is added in said carbide powder.

3. A solar heat selective absorptive fiber as set forth in claim 1, in which said carbide is ZrC.

4. A solar heat selective absorptive fiber as set forth in claim 1, in which said thermoplastic synthetic linear polymer is polyamide or polyester.

5. A solar heat selective absorptive fiber as set forth in claim 1, in which 1 to 10% by weight of the carbide powder, or the mixed powder of said carbide powder and a aluminum powder is mixed with said thermoplastic synthetic linear polymer.

6. A solar heat selective absorptive fiber obtained by melt-compound-spinning of

   A. a kneaded composition comprising
   (a) a carbide powder selected from Zr, Ti and Hf, and a thermoplastic synthetic linear polymer,
   or
   (b) a mixed powder of a carbide powder selected from Zr, Ti and Hf, and an aluminum powder, and a thermoplastic synthetic linear polymer, and
   B. a thermoplastic synthetic linear polymer, whereby a core-and-sheath structure comprising the core of the kneaded composition and the sheath of the thermoplastic synthetic linear polymer is formed.

**Revendications**

1. Fibre , absorbant sélectivement la chaleur solaire , obtenue par filage au fondu d'une composition malaxée comprenant une poudre de carbure, choisie parmi un carbure de Zr , de Ti et de Hf ,et un polymère thermoplastique linéaire synthétique .

2. Fibre absorbant sélectivement la chaleur solaire ,telle que présentée à la revendication 1 , dans laquelle une poudre d'aluminium est ajoutée à ladite poudre de carbure .

3. Fibre absorbant sélectivement la chaleur solaire ,telle que présentée à la revendication 1 , dans laquelle ledit carbure est ZrC.

4. Fibre absorbant sélectivement la chaleur solaire ,telle que présentée à la revendication 1 , dans laquelle ledit polymère thermoplastique linéaire synthétique est un polyamide ou un polyester .

5. Fibre absorbant sélectivement la chaleur solaire , telle que présentée à la revendication 1 , dans

EP 0 302 141 B1

laquelle 1 à 10 % en poids de la poudre de carbure , ou de la poudre mixte formée par ladite poudre de carbure et de la poudre d'aluminium , sont mélangés audit polymère thermoplastique linéaire synthétique .

6. Fibre absorbant sélectivement la chaleur solaire , obtenue par filage au fondu :
A. d'une composition malaxée comprenant :
(a) une poudre de carbure choisie parmi un carbure de Zr ,de Ti et de Hf ,et un polymère thermoplastique linéaire synthétique , ou
(b) une poudre mixte formée d'un mélange de poudre de carbure , choisi parmi un carbure de Zr , de Ti et de Hf , et d'une poudre d'aluminium , avec un polymère thermoplastique linéaire synthétique , et
B. un polymère thermoplastique linéaire synthétique ,de sorte qu'il se forme une structure âme et gaine ,comprenant comme âme la composition malaxée et comme gaine le polymère thermoplastique linéaire synthétique .

**Patentansprüche**

1. Selektiv Sonnenwärme absorbierende Faser, die durch Schmelzspinnen einer durchgekneteten Mischung aus Karbidpulver, das aus Zr, Ti und Hf ausgewählt ist, und einem thermoplastischem, synthetischen, linearen Polymer hergestellt ist.

2. Selektiv Sonnenwärme absorbierende Faser nach Anspruch 1, dadurch gekennzeichnet, daß Aluminiumpulver zum Karbidpulver hinzugefügt ist.

3. Selektiv Sonnenwärme absorbierende Faser nach Anspruch 1, dadurch gekennzeichnet, daß das Karbid ZrC ist.

4. Selektiv Sonnenwärme absorbierende Faser nach Anspruch 1, dadurch gekennzeichnet, daß das thermoplastische, synthetische, lineare Polymer Polyamid oder Polyester ist.

5. Selektiv Sonnenwärme absorbierende Faser nach Anspruch 1, dadurch gekennzeichnet, daß 1 bis 10 Gewichtsprozent des Karbidpulvers oder der Pulvermischung aus Karbidpulver und Aluminiumpulver mit dem thermoplastischen, synthetischen, linearen Polymer gemischt ist.

6. Selektiv Sonnenwärme absorbierende Faser, hergestellt durch Schmelzverbundspinnen
A. einer durchgekneteten Mischung aus
a) Karbidpulver, das aus Zr, Ti und Hf ausgewählt ist, und einem thermoplastischen, synthetischen, linearen Polymer,
oder
b) einer Pulvermischung aus Karbidpulver, das aus Zr, Ti und Hf ausgewählt ist, und Aluminiumpulver und einem thermoplastischen, synthetischen, linearen Polymer,
und
B. eines thermoplastischen, synthetischen, linearen Polymers, wodurch eine Kern- und -Hüllen-Struktur, die den Kern aus der durchgekneteten Mischung und die Hülle aus dem thermoplastischen, synthetischen, linearen Polymer aufweist, gebildet ist.

5

# F I G. 1

① ②

28°C

27°C

26.8°C

26.5°C

26°C

# F I G. 2

① ②

28°C

27.3°C

26.8°C

26.3°C

26°C

25.6°C